# EUROPEAN PATENT SPECIFICATION

(11) **EP 4 725 155 B1**
(45) Date of publication and mention of the grant of the patent: **26.08.2026**
(21) Application number: 24732416.3
(22) Date of filing: 30.05.2024
(51) Int. Cl.: H04L 9/08, G06N 3/00

(54) **PRIVACY-PRESERVING COMPUTATION USING SECRET STEP SIZE**
DATENSCHUTZBEWAHRENDE BERECHNUNG UNTER VERWENDUNG DER GEHEIMEN SCHRITTGRÖSSE
CALCUL PRÉSERVANT LA CONFIDENTIALITÉ À L'AIDE D'UNE TAILLE DE PAS SECRÈTE

(30) Priority: 09.06.2023 EP 23178396
(43) Date of publication of application: 15.04.2026
(73) Proprietor: Roseman Group B.V., 4817 KW Breda (NL)
(72) Inventor: VAN DER MEER, Noah, 3526 KS Utrecht (NL); BOUMAN, Niek, Johannes, 3526 KS Utrecht (NL)
(74) Representative: DeltaPatents B.V.
(86) International application number: PCT/EP2024/064945
(87) International publication number: WO 2024/251611

(56) References cited:
- MARTINE DE COCK ET AL: "High Performance Logistic Regression for Privacy-Preserving Genome Analysis", ARXIV.ORG, CORNELL UNIVERSITY LIBRARY, 201 OLIN LIBRARY CORNELL UNIVERSITY ITHACA, NY 14853, 13 February 2020 (2020-02-13), XP081598764
- WEI XIE ET AL: "PrivLogit: Efficient Privacy-preserving Logistic Regression by Tailoring Numerical Optimizers", ARXIV.ORG, CORNELL UNIVERSITY LIBRARY, 201 OLIN LIBRARY CORNELL UNIVERSITY ITHACA, NY 14853, 3 November 2016 (2016-11-03), XP080729260
- YUANMING SHI ET AL: "Communication-Efficient Edge AI: Algorithms and Systems", ARXIV.ORG, CORNELL UNIVERSITY LIBRARY, 201 OLIN LIBRARY CORNELL UNIVERSITY ITHACA, NY 14853, 22 February 2020 (2020-02-22), XP081606005

## Description

### FIELD OF THE INVENTION

The invention relates to a cryptographic system for performing a privacy-preserving computation on secret data. The invention further relates to a cryptographic devices for use in such a system; to a corresponding computer-implemented method; and to a computer-readable medium.

### BACKGROUND OF THE INVENTION

There is a growing demand for privacy enhancing technologies (PETs), i.e., data processing techniques that intrinsically protect the privacy of the data they operate on. For example, with the cryptographic technique of secure multiparty computation (MPC), multiple parties can perform a computation on their joint input using a distributed cryptographic protocol, such that each party learns nothing beyond the output of computation and his own (private) input.

One reason for the growing demand for PETs is that citizens are becoming increasingly dependent on the digital information stored about them by various companies and institutions. Because of this increasing dependence, the consequences of a breach of personal data are getting increasingly severe. And due to the worldwide surge of cybercrime and nation-state-sponsored cyber espionage, the risk of a data breach has increased sharply in recent years.

Also, data-based collaborations between separate entities (like companies, hospitals, local governments) usually implies that personal data is copied between the entities, which poses the risk of uncontrolled spreading of data, in particular personal information. PETs can enable data collaboration between entities without the need for sharing the data in cleartext form.

Another factor driving demand for PETs is the emergence of legal frameworks for data protection, such as the European GDPR and the Californian CCPA legislation, and their mandatory compliance. In the context of such frameworks, PETs are valuable as technical safeguards, and typically provide concrete instantiations of abstract legal notions.

One important functionality for PETs is the fitting of regression models, such as logistic or linear regression, to a distributed dataset comprising contributions of multiple inputters. For example, the multiple inputters may each provide different information about a common set of records (horizontally partitioned data), may each provide the same information but about different records (vertically partitioned data), or any combination thereof. By fitting a regression model on such a distributed dataset, a common regression model representing the distributed dataset can be obtained, without the need to combine the data in a single place. The fitted model can also be applied to a record while keeping the record and/or the fitted model private. More generally, also other machine learnable models can be applied in this way.

Unfortunately, to obtain an efficient implementation of a given functionality using MPC, it is typically not possible to simply take an existing algorithm that implements the functionality, and run that directly on top of an available cryptographic MPC engine. This is because MPC has certain limitations, e.g., it is not directly possible to branch on a secret guard, because that would reveal the value of the guard to the parties carrying out the MPC. Moreover, the relative costs of basic operations are typically different when performing a computation as a distributed cryptographic protocol on secret data under MPC, then they are when performing the computation directly on the plain data. Therefore, to efficiently implement a certain functionality, it is often needed to specifically adapt the algorithms implementing that functionality to the specific limitations and costs incurred by the underlying cryptography.

The paper "High Performance Logistic Regression for Privacy-Preserving Genome Analysis" by M. de Cock et al., Cryptology ePrint Archive 2020/171, proposes a cryptographic protocol that implements logistic regression training using multi-party computation. The set-up involves secure Two-Party Computation protocols, along with a trusted initializer that distributes correlated randomness to the two computing parties. A gradient descent based algorithm is used for training the logistic regression model, involving specific protocols for computing the activation function, as well as a series of specific cryptographic engineering optimizations to improve the performance. One optimization is to approximate the sigmoid function occurring in the activation function of logistic regression by a step function that avoids the relatively costly operations of performing a division and an evaluation of an exponential function under multi-party computation.

### SUMMARY OF THE INVENTION

It would be desirable to provide techniques for performing a privacy-preserving computation on secret data that have improved efficiency and/or that more accurately perform a desired computation. In particular, it would be desirable to provide cryptographic techniques that allow to more efficiently perform a numerical optimization of an objective function under multi-party computation, such as the objective function for fitting a regression model. Moreover, it would be desirable to provide techniques that allow a regression model to be more accurately fitted and applied using multi-party computation.

In accordance with a first aspect of the invention, a cryptographic system for performing a privacy-preserving computation is provided, as defined by claim 1. In accordance with further aspects of the invention, a cryptographic device for use such a system; and a cryptographic method of performing such a privacy-preserving computation are provided, as defined by claims 13 and 14, respectively. In accordance with an aspect of the invention, a computer-readable medium is provided, as defined by claim 15.

The techniques described herein make use of cryptographic secure multi-party computation (MPC) to perform a privacy-preserving computation on secret data. As is known per se, MPC is a cryptographic technique in which a computation is performed in a distributed way between multiple cryptographic devices in such a way that the inputs, intermediate values, and/or outputs of the computation remain hidden from the parties performing the computation. Such values that remain hidden from the parties may be referred to as the secret values of the MPC. In general, a secret value of the MPC may have the property that a limited number of parties, up to a given threshold, does not know the secret value. However, a number of parties that exceeds the threshold may be able to derive the secret value.

A secret value can for example be a threshold encryption, of which the decryption key is distributed among the parties; or a secret sharing, also referred to herein simply as a sharing. A sharing may be defined as a distributed representation of a value into shares of the respective parties such that a limited number of the shares, up to the given threshold, does not allow to derive the represented value. Although the term "secret share" is most commonly used for MPC techniques using so-called arithmetic secret sharing, also other MPC techniques such as garbled circuits are considered herein to operate on secret shares. In multi-party computation, through the use of secret values and of various protocols that allow to perform operations on secret values, e.g., in secret-shared or threshold encrypted form, various computations can be performed, while keeping the underlying values hidden from the parties that perform them, thus providing privacy-preserving computation. The design of efficient cryptographic protocols for implementing specific MPC operations is the topic of a significant amount of research.

In particular, various embodiments use MPC to perform a numeric optimization of an objective function. This function can for example be a loss function for fitting a regression model, such as a logistic regression model; or any other machine-learnable model in general. Although numeric optimization techniques are known per se, one specific problem when implementing such techniques with MPC is that they involve operations on real, i.e., non-integer, numbers. In general, it is possible to represent such numbers in MPC as fixed-point or floating-point numbers and to perform operations on such representations, such as multiplication or computation a square root. However, such operations are particularly expensive under MPC, especially compared to computations on integers. This makes it particularly important under MPC to decrease the number of times that for example the gradient of the objective function is evaluated.

Interestingly, the inventors devised a way to perform a numeric optimization under MPC that takes these performance aspects of the MPC setting into account by greatly reducing the number of numeric operations that are needed. The numeric optimization may be performed by determining, using the multi-party computation, a secret optimization direction; and by updating, using the multi-party computation, the secret parameters of the objective function based on the secret optimization direction and based on a given step size. This step size is also often referred to as the learning rate.

In many cases, in known MPC works, a step size is used that is constant and known to the parties. Thereby, it is avoided to compute the step size under MPC. In particular, MPC techniques thereby avoid adapting to the MPC setting techniques to determine the step size dynamically e.g. using line search. In line search, the step size is determined by one or more evaluations of the objective function. In MPC, this is undesirable since this typically involves a large number of numeric operations.

However, using a constant step size, especially in the setting of multi-party computation, has the disadvantage that, if if chosen too large, the method may not converge, or may run into numerical issues, e.g. due to limited range of fixed point arithmetic as is often used in secure multi-party computation. If chosen too small, convergence is generally slow, leading to poor performance.

Interestingly, however, the inventors realized that it is still possible to use a dynamic step size when performing a numeric optimization using MPC. Namely, the inventors propose to compute the step size as a secret value of the MPC from two other secret values of the MPC, namely, from the secret optimization direction and from a secret curvature value for the objective function. This is also referred to as a curvature-adaptive step size. Accordingly, the step size may be determined dynamically without line search. The curvature value may be indicative of the curvature of the objective function in the direction of the optimization direction, e.g., may be computed as an inner product between the optimization direction and the gradient of the objective function.

In the setting of MPC, the use of a curvature-adaptive step size specifically leads to significant performance improvements. Compared to using a step size that is constant, or that is determined independently from the optimization direction and/or the curvature, e.g., according to a fixed schedule, the curvature-adaptive step size leads to faster convergence, while it avoids the overhead that attempting to use line search in MPC would be expected give. It is noted that the trade-off between a fixed step size; a curvature-adaptive step size; and a step size determined by line search is different in the MPC setting than when performing optimization on plain data, where the overhead of using line search can be much more acceptable.

Specifically, the inventors realized that, in the MPC setting, the use of a curvature-based step size as described herein, makes it possible to efficiently apply a quasi-Newton optimization algorithm on secret data. For example, BFGS, or especially L-BFGS, can be used. Generally, in a quasi-Newton optimization algorithm, an optimization direction may be used that is determined by computing a product of an approximation of an inverse Hessian of the objective function, with a gradient of the objective function.

Interestingly, quasi-Newton methods typically use fewer iterations than for example gradient descent. However, when applying quasi-Newton methods, it typically does not work to use a constant or otherwise fixed step size. Namely, in many cases, this does not lead to convergence. Such convergence problems arise for example when using quasi-Newton to fit a regression model such as logistic regression. Accordingly, when applying L-BFGS outside of the MPC setting, line search is typically used.

This is in contrast to the MPC setting where, as discussed, it is known in the literature to use gradient descent with a fixed step size, and where attempting to use line search would incur a great performance penalty. Moreover, in the MPC setting, selecting a good step size is particularly problematic, since the data and parameters need to be kept secret and so cannot be inspected to manually correct the learning rate.

Interestingly, the use in MPC of a secret step size determined based on a secret curvature value, as described herein, makes it possible to efficiently use quasi-Newton algorithms in the MPC setting. In particular, by using a quasi-Newton method, compared to existing MPC-based optimization techniques that use e.g. gradient descent, the number of iterations needed to reach convergence can be greatly reduced, greatly improving efficiency of the overall optimization. When using a fixed step size, in practice, quasi-Newton methods can have numeric stability and convergence issues, so when using a fixed step size, gradient descent may be preferred. Due to the adaptive step size, however, convergence problems due to the use of a fixed step size are avoided. In particular, super-linear convergence of the overall method can be attained, in particular for logistic regression but also for other optimization problems. Moreover, the computation of the step size can be implemented relatively efficiently under MPC, e.g., it is avoided to evaluate the objective function as part of determining the step size, as would be needed when attempting to use line search in MPC.

Optionally, the secret step size may be stored, by a cryptographic device carrying out the multi-party computation, as a secret fixed-point value of the multi-party computation. The secret step size may be computed by applying one or more privacy-preserving fixed point arithmetic protocols. Cryptographic protocols for carrying out fixed-point computations are known per se and can be applied relatively efficiently. In particular, especially in combination with performing a normalization of the input data and/or including a regularization term in the objective function of the numeric optimization, fixed-point numbers may be used to combine beneficial performance with sufficient accuracy. It is also possible to use secret floating-point values, however.

Optionally, the curvature value may be determined under the multi-party computation by determining a secret inner product between the secret optimization direction and a secret gradient of the objective function. Interestingly, such an inner product can be implemented relatively efficiently using MPC, in particular when using MPC based on linear secret sharing and/or when using MPC-based fixed-point representations, as discussed in more detail elsewhere. The inner product may represent the curvature in that a small value may indicate a relatively flat curvature of the objective function in the optimization direction, and a large value may indicate a relatively steep curvature. The step size may be determined as a decreasing function in the amount of curvature, e.g., the more curvature, the smaller the step may be. Detailed examples are provided herein.

Optionally, the step size may be determined from the gradient and from the optimization direction by applying a privacy-preserving inner product protocol; a privacy-preserving square root protocol; and a privacy-preserving reciprocal protocol. In particular, the inner product may be used to determine the curvature value, as discussed; and the square root and the reciprocal may be used to determine the step size as a decreasing function in the amount of curvature. As also discussed elsewhere, MPC protocols for these numeric operations are known per se in the art and can be implemented relatively efficiently.

Optionally, the numeric optimization may be implemented by using L-BFGS. In this case, a two-loop recursion may be used to determine the secret optimization direction. Interestingly, it is possible to implement this two-loop recursion efficiently under MPC by using numeric operations for which implementations are available per se, e.g., using a fixed-point inner product, a fixed-point reciprocal, and a fixed-point multiplication; or alternatively using their floating-point equivalents. This way, the low computation overhead, low memory requirements, and accurate results of L-BFGS can be attained efficiently in the MPC setting, especially when combined with the curvature-based step size computation.

Optionally, the numeric optimization of the objective function may be used to fit secret model parameters of a regression model on secret input features and/or secret response variables. The model parameters may also be referred to as the model weights. The model parameters may include an intercept value and respective weight values for respective input features. In particular, the regression model may be a logistic regression model; an ordinal regression model; a multinomial regression model; or a linear regression model. The input features and/or response variables to which the model is fitted, may be secret. For example, one or more input features and/or response variables may be provided as secret inputs to the multiparty computation by one or more input parties. For example, the input features and/or response variables may represent a horizontally or vertically partitioned dataset. Instead or in addition, one or more input features and/or response variables may be the result of another computation on secret data performed under multi-party computation, such as a database join, a database groupby, and the like. Generally, regression fitting is an important application of multi-party computation, to which the cryptographic techniques described herein can be well applied.

Optionally, the fitted model parameters of the regression model may be kept secret, and may subsequently be used to apply the fitted regression model without opening the fitted parameters. The input features to which the model is applied, can be public, secret, or a combination thereof. For example, an input party may provide one or more input features, and an output party (which can be the input party itself) may obtain a result of applying the model, e.g., a predicted response and/or a determined class probability.

Optionally, the optimization that is being performed may comprise a sigmoid function being applied under multi-party computation to a secret point x. Such an evaluation of a sigmoid function for example arises when fitting a regression model, where x may represent a biased linear combination of input features according to the model parameters that are being fitted. It is known per se to avoid the evaluation of the sigmoid function under multi-party computation, by approximating it for example with a step function. However, this has the disadvantage that a less accurate regression model is obtained. A logistic regression model trained or applied with an approximation of the sigmoid by a different function, is effectively no longer a real logistic regression regression model.

Interestingly, the inventors found an alternative cryptographic technique to evaluate the sigmoid under multi-party computation, that is efficient and that avoids the need to replace the sigmoid function by an entirely different function. Namely, the inventors envisaged to evaluate the sigmoid of a secret point x under multi-party computation based on evaluating an exponential function at the secret point x by computing (1+x/K)^K. Here, K can be at most or at least 8, at most or at least 16, or at most or at least 32, for example.

As is known per se, the value (1+x/K)^K converges to the exponential as K approaches infinity. For larger values of x, also a relatively large value of K may be needed. The inventors realized, however, that in many practical cases where the sigmoid is used, the value x is typically relatively small. In this case, also for small values of K, (1+x/K)^K may accurately represent the exponential of x. This is in particular the case for the sigmoid that is used in regression, and especially when the input features are normalized and/or when regularization is applied to the model parameters. In such cases, a relatively small value of K suffices.

Moreover, the inventors realized that the value (1+x/K)^K can be computed efficiently as a secret value of a multi-party computation. Only a relatively small amount of secure multi-party numeric operations, e.g., fixed-point operations, may be needed. Despite this, still, an accurate evaluation of the exponential function can be obtained. This performance/accuracy trade-off is different in the MPC setting than in the plain data setting, where different approximations are typically used.

It is noted that the provided technique for evaluating an exponential function under multi-party computation, can be applied more generally than just for computing a sigmoid in an MPC-based numeric optimization. In particular, in general, the inventors envisage a cryptographic system for performing a privacy-preserving computation on secret data, wherein the cryptographic system comprises multiple cryptographic devices, wherein the multiple cryptographic devices are configured to perform the computation as a cryptographic secure multi-party computation between the multiple cryptographic devices, and wherein the privacy-preserving computation comprising an evaluation of an exponential function at a secret point x. In such a case, the exponential function may be evaluated by computing (1+x/K)^K under the multi-party computation. The computation of the exponential function can be part of the computation of a sigmoid, and in particular, of a computation of a class probability or log-likelihood of a regression model, but that is not needed. Generally, however, the input is preferred to be bounded, e.g., to values that are at most 10; at most 2; or at most 1. Also a cryptographic device for use in such a system is envisaged. For example, the cryptographic devices may be configured to apply a fitted regression model, where the model parameters and/or the features to which the model is applied, are secret.

Optionally, the evaluation of the exponential function may be stored as a secret fixed-point number of the secure multi-party computation. The exponential function may be evaluated by applying secure multi-party computation protocols for fixed-point computation, in particular for fixed-point multiplication, as known per se. For example, a secret fixed-point value may be initialized to (1+x/K), and (1+x/K)^K may be computed from (1+x/K) by square-and-multiply under the multi-party computation. Interestingly, K may be set to a power of two, in which case the square-and-multiply can be implemented by repeated squaring, making computation under multi-party computation particularly efficient.

Optionally, the objective function may comprise a regularization term applied to the model parameters. The secret point to which the exponential function is applied, may be based on the model parameters, as is the case for example for logistic regression. In such cases, the use of a regularization term, e.g., a L2 regularization, may constrain the model parameters, and thereby also the value of the secret point to which the exponential function is applied. As also discussed elsewhere, this is beneficial for the accuracy of the evaluation of the exponential function.

It will be appreciated by those skilled in the art that two or more of the above-mentioned embodiments, implementations, and/or optional aspects of the invention may be combined in any way deemed useful. Modifications and variations of any system and/or any computer readable medium, which correspond to the described modifications and variations of a corresponding computer-implemented method, can be carried out by a person skilled in the art on the basis of the present description, and the other way round as well.

### BRIEF DESCRIPTION OF THE DRAWINGS

These and other aspects of the invention will be apparent from and elucidated further with reference to the embodiments described by way of example in the following description and with reference to the accompanying drawings, in which:
Fig. 1 shows a cryptographic device;
Fig. 2 shows a cryptographic device;
Fig. 3 shows a cryptographic system;
Fig. 4 shows a detailed example of using MPC for a numeric optimization;
Fig. 5 shows a detailed example of using MPC for an exponential function;
Fig. 6 shows a detailed example of using MPC to compute a step size;
Fig. 7 shows a computer-implemented method;
Fig. 8 shows a computer-implemented method;
Fig. 9 shows a computer-readable medium comprising data.

It should be noted that the figures are purely diagrammatic and not drawn to scale. In the figures, elements which correspond to elements already described may have the same reference numerals.

### DETAILED DESCRIPTION OF EMBODIMENTS

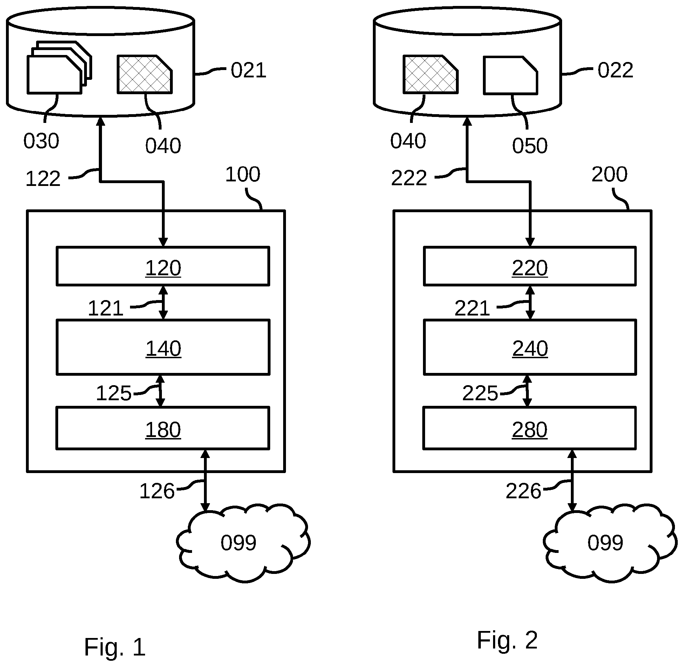

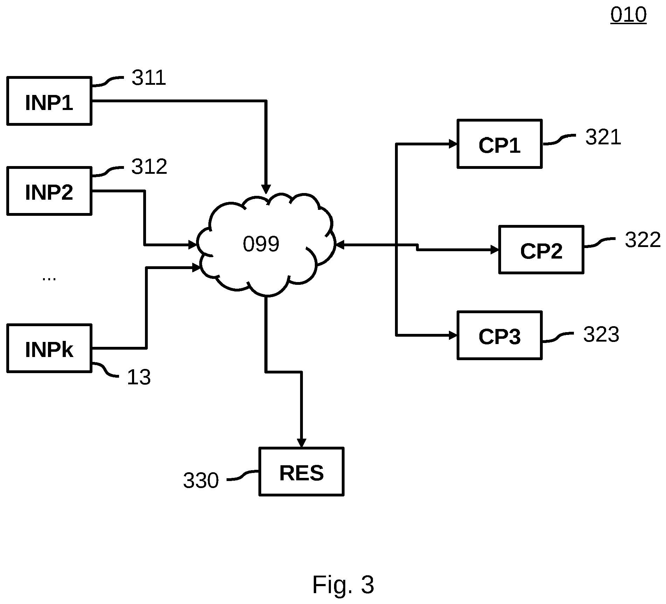

**Fig. 1** shows a cryptographic device 100 for use in a cryptographic system as described herein, e.g., in Fig. 3. The cryptographic system may be for performing a privacy-preserving computation on secret data. The computation may be performed as a cryptographic secure multi-party computation between multiple cryptographic devices, including device 100. The privacy-preserving computation may comprise a numeric optimization of an objective function.

The device 100 may comprise a data interface 120 for accessing data 040 representing parameters of the objective function as secret values of the multi-party computation. As shown in the figure, the data interface may further be for accessing data 030 referred to in the objective function, for example, a training dataset on which a model, such as a regression model, is fitted or trained.

For example, a model may be trained on a training dataset 030 of multiple records, e.g., at least 1000 or at least 100000 records. A record may comprise values for one or more input features, e.g. at most or at least 5, at most or at least 10, or at most or at least 20 features. A record may further comprise a label, e.g., a binary label for logistic regression, a categorical label for multinomial regression, an ordinal label for ordinal regression, or an output feature for linear regression. For example, the parameters 040 may include an intercept, and a weight per feature. For example, the number of parameters 040 can be at most or at least 10 or at most or at least 20.

In other examples, the number of parameters is much larger, e.g., at least 100 or at least 1000. For example, this can be the case when using the numeric optimization to train a neural network or the like.

Generally, the values of the dataset 030 and/or parameters 040 are secret values of the multi-party computation. Such secret values may be stored in various ways, as also discussed elsewhere; e.g., as secret shares or the like. Values representing real numbers can be stored in a fixed-point representation, for instance.

For example, as also illustrated in Fig. 1, the input interface may be constituted by a data storage interface 120 which may access the data 030, 040 from a data storage 021. For example, the data storage interface 120 may be a memory interface or a persistent storage interface, e.g., a hard disk or an SSD interface, but also a personal, local or wide area network interface such as a Bluetooth, Zigbee or Wi-Fi interface or an ethernet or fibreoptic interface. The data storage 021 may be an internal data storage of the system 100, such as a hard drive or SSD, but also an external data storage, e.g., a network-accessible data storage. In some embodiments, the data 030, 040 may each be accessed from or distributed across different data storages, e.g., via a different subsystem of the data storage interface 120. Each subsystem may be of a type as is described above for data storage interface 120.

The device 100 may further comprise a processor subsystem 140 which may be configured to, during operation of the system 100, determine, using the multi-party computation, a secret optimization direction. The processor subsystem 140 may be further configured to determine, using the multi-party computation and based on the optimization direction, a secret step size. The processor subsystem 140 may be further configured to update, using the multi-party computation, the secret parameters of the objective function based on the secret optimization direction and the secret step size. The processor subsystem 140 may be configured to determine the secret step size from the secret optimization direction and from a secret curvature value of the objective function using the multi-party computation.

As also discussed with respect to Fig. 3, the device 100 may be further configured to provide inputs to the multi-party computation, e.g., to obtain part of the dataset 030 in plain form and input this part to the multi-party computation, e.g. by secret-sharing, encrypting, or otherwise masking them. Instead or in addition, the device 100 may be further configured to obtain outputs from the multi-party computation, e.g., to obtain the optimized parameters 040 and/or a result of applying a model using the optimized parameters 040 to further inputs.

The system 100 may also comprise a communication interface 180 configured for communication 126 with at least one further cryptographic device of the cryptographic system. Communication interface 180 may internally communicate with processor subsystem 140 via data communication 125. Communication interface 180 may be arranged for direct communication with the other devices, e.g., using USB, IEEE 1394, or similar interfaces. As illustrated in the figure, communication interface 180 may also communicate over a computer network 099, for example, a wireless personal area network, an internet, an intranet, a LAN, a WLAN, etc. For instance, communication interface 180 may comprise a connector, e.g., a wireless connector, an Ethernet connector, a Wi-Fi, 4G or 4G antenna, a ZigBee chip, etc., as appropriate for the computer network. Communication interface 180 may be an internal communication interface, e.g., a bus, an API, a storage interface, etc.

**Fig. 2** shows a cryptographic device 200 for use in a cryptographic system as described herein, e.g., in Fig. 3. The cryptographic system may be for performing a privacy-preserving computation on secret data. The privacy-preserving computation may be performed as a cryptographic secure multi-party computation between multiple cryptographic devices including device 200. The privacy-preserving computation may comprise an evaluation of an an exponential function, wherein the exponential function is applied to a secret point x. For example, the exponential function may be evaluated as part of evaluating a sigmoid function, e.g., for logistic or other regression model fitting, or for applying a neural network model, or the like.

In general, the device 200 may be as described for device 100 of Fig. 1. In particular, device 200 may comprise a data interface 220, a processor subsystem 240, and/or a communication interface 280, for which the same options are available as discussed for cryptographic device 100 of Fig. 1. It is also possible to combine devices 100 and 200, e.g., a single cryptographic device may be configured to perform both regression model fitting and application.

In particular, the cryptographic device 200 may comprise a data interface 220. The data interface can for example be for accessing data 040 representing a fitted, in other words trained, model, e.g., as fitted by device 100 of Fig. 1. The data interface 220 may be further for accessing data 050 representing an input to which the model is applied. Here, the model parameters 040 of the model, and/or the input 050 to which the model is applied, may be secret values of the multi-party computation, and accordingly, applying the model may use an evaluation of an exponential function at a secret point x based on the parameters 040 and/or input 050. Other examples where the secret point x does not arise from applying a fitted model are also possible, however. Processor subsystem 240 may be configured to determine the evaluation of the exponential function at the secret point x by computing (1+x/K)^K under the secure multi-party computation.

Similarly to device 100 of Fig. 1., processor subsystem 240 may be further configured to provide input to and/or receive output from the multi-party computation.

In general, each device described in this specification, including but not limited to the system 100 of Fig. 1 and the system 200 of Fig. 2, may be embodied as, or in, a single device or apparatus, such as a workstation or a server. The device may be an embedded device. The device or apparatus may comprise one or more microprocessors which execute appropriate software. For example, the processor subsystem of the respective system may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the processor subsystem of the respective system may be implemented in the device or apparatus in the form of programmable logic, e.g., as a Field-Programmable Gate Array (FPGA). In general, each functional unit of the respective system may be implemented in the form of a circuit. The respective system may also be implemented in a distributed manner, e.g., involving different devices or apparatuses, such as distributed local or cloud-based servers.

**Fig. 3** shows a cryptographic system 010 for performing a privacy-preserving computation as a cryptographic secure multi-party computation. The computation may comprise performing a numeric optimization and/or evaluating an exponential function, as discussed in more detail elsewhere. The cryptographic system 010 may in general comprise multiple input devices, multiple different cryptographic devices, and at least one result device, where the sets of input, cryptographic, and result devices may overlap with each other. As illustrated, the devices typically communicate over a computer network 099, e.g., the internet or a local network.

In particular, shown in the figure are three cryptographic devices **CP1**, 201; **CP2,** 202; and **CP3,** 203. The cryptographic devices may be based on cryptographic device 100 of Fig. 1 or cryptographic device 200 of Fig. 2. The number of cryptographic devices that is used can vary depending on the particular technique used for the multi-party computation and the security properties which are desired. For example, the number of cryptographic devices **CPi** can be two, three, or more.

The cryptographic devices **CPi** may be configured to perform a secure multi-party computation (also known per se as multi-party computation, secure computation, or MPC). Generally, a multi-party computation may be a distributed protocol between the cryptographic devices for performing a computation in a privacy-preserving way. Depending on the specific technique used, MPC may ensure privacy and/or correctness of the computation against an attacker that eavesdrops or controls one or more (but typically not all) of the cryptographic devices. As known per se, any computation can be performed as a multi-party computation (in other words, "under the multi-party computation"), but concrete computational and communication efficiency can in general greatly depend on how exactly the computation is performed.

In particular, the multi-party computation can be performed based on one of the following techniques:
- based on secret sharing, in particular arithmetic secret sharing such as Shamir secret sharing, replicated secret sharing, or additive secret sharing. For example, the multi-party computation can be based on the techniques described in Shamir, "How to Share a Secret", Communications ACM, 1979; Ben-Or, Goldwasser, Wigderson, "Completeness Theorems for Non-Cryptographic Fault-Tolerant Distributed Computation (Extended Abstract)", Proceedings of the 20th Annual ACM Symposium on Theory of Computing, 1988; Chaum, Crepeau, Damgaard, "Multiparty Unconditionally Secure Protocols (Extended Abstract)", Proceedings of the 20th Annual ACM Symposium on Theory of Computing, 1988; Ito, Saito, Nishizeki, "Secret sharing scheme realizing general access structure", Electronics and Communications in Japan (Part III: Fundamental Electronic Science), 1989; Damgaard, Pastro, Smart, Zakarias, "Multiparty Computation from Somewhat Homomorphic Encryption", proceedings CRYPTO 2012;

- based on garbled circuits, e.g., see Yao, "Protocols for Secure Computations (Extended Abstract)", 23rd Annual Symposium on Foundations of Computer Science, Chicago, 1982;
- based on oblivious transfer, e.g., see Goldreich, Micali, Wigderson, "How to Play any Mental Game or A Completeness Theorem for Protocols with Honest Majority", Proceedings of the 19th Annual ACM Symposium on Theory of Computing, 1987;
- based on threshold homomorphic encryption, e.g., see Cramer, Damgaard, Nielsen, "Multiparty Computation from Threshold Homomorphic Encryption", proceedings EUROCRYPT 2001;
- based on any combination of the above, e.g., see Demmler, Schneider, Zohner, "ABY - A Framework for Efficient Mixed-Protocol Secure Two-Party Computation", proceedings NDSS 2015.

Various higher-level operations such as sorting and integer comparison can be performed based on such basic multi-party computation protocols as discussed e.g. in M. Keller, "MP-SPDZ: A Versatile Framework for Multi-Party Computation", proceedings ACM CCS 2020; or as implemented in MPyC, see https://github.com/Ischoe/mpyc.

The multi-party computation may be configured to perform operations on so called sharings, or secret shares, of values. A secret share may be a distributed representation of an input, intermediate, or output value of the MPC. A limited number of shares, up to a certain threshold T, may not allow to derive the represented value. The threshold may be configurable, with different techniques supporting different possible threshold. For example, the multi-party computation may be an honest majority MPC, where the threshold *T* is strictly smaller than the number of parties *N,* e.g., *N =* 2*T* + 1. Or, the multi-party computation can be a full-threshold MPC, where the threshold can be higher, e.g., *T = N -* 1. Examples of sharings are arithmetic sharing, such as Shamir secret sharing or replicated secret sharing; XOR sharing; or Yao sharing. It is stressed that the term secret sharing in this specification also includes Yao sharings, e.g., secret values of an MPC computation performed using garbled circuits, as also done in "ABY - A Framework for Efficient Mixed-Protocol Secure Two-Party Computation".

A value that is computed on by the MPC but that is represented among the parties in such a way that no single party, more generally no unqualified set of parties, can derive the value from that representation, is referred to as a secret value, or private value, of the MPC. A secret value can be a secret sharing, but it is also possible e.g. to use a threshold encryption. For example, a secret value can be a secret input, a secret output, or a secret intermediate value. Here, a secret input may be known in the plain by the party inputting it, and known only in a secret representation by the cryptographic devices CPi; and similarly, a secret output may be learned in the plain by the party receiving it as output, but may be known only in a secret representation by the cryptographic devices **CPi**. A private intermediate value may be known only to the cryptographic devices **CPi**, and only as a secret representation. By processing values using secret representations, the data can be kept secret, at least as long as the underlying assumptions of the multi-party computations (e.g., a number and/or type of corruptions of the cryptographic devices) are satisfied.

Also shown in the figure are a number of input devices **INP1**, 101; **INP2**, 102; up to **INPk**, 103. The input devices may input values occurring in the objective function being optimized, e.g., the input devices may together input a dataset with respect to which a loss function is optimized. For example, respective input devices may input respective sets of records with a common set of features, or may input respective sets of features for a common set of records. As another example, an input device may input a record to which a fitted model may be applied.

The input devices 101-103 may use the hardware configuration discussed in Fig. 1. The number of input devices can be two, at most or at least three, or at most or at least five, for example. In many cases, the sets of inputs devices **INPi** and cryptographic devices CPi may wholly or partially overlap. For example, the set of input devices may be a subset or a superset of the set of cryptographic devices, or may be exactly the same.

Further shown is a result device **RES.** The result device **RES** may obtain a result of the MPC based on the performed privacy-preserving computation. For example, the result device **RES** may obtain the optimized parameters of the objective function, e.g., the fitted parameters of the regression model; or a value derived from the optimized parameters, e.g., a result of applying the fitted model to an input. It is also possible for multiple respective result devices to obtain multiple respective results of the multi-party computation. Although illustrated as a separate device in the figure, the result device(s) **RES** can be the same devices as an input device **INPi** and/or cryptographic device **CPi.** Generally, the result device may be implemented using the hardware configuration discussed w.r.t. Fig. 1.

Many known multi-party computation techniques are defined per se for the case where the input and result devices **INPi** and **RES** form a subset of the set of cryptographic devices **CPi** that perform the MPC. To use such techniques in a setting where an input and/or result device does not perform the MPC itself, an input device can for example determine a secret representation, e.g., a secret sharing, and distribute it among the computation devices. Similarly, a result device can for example receive a secret representation, e.g., respective secret shares, of an output from the computation devices and derive the output from the secret representation. It is also possible to use specific techniques for letting an external party provide inputs to and/or obtain outputs from a multi-party computation. For example, the techniques from the following reference can be used: T. P. Jakobsen, J. B. Nielsen, and C. Orlandi. "A framework for outsourcing of secure computation", proceedings CCSW'14.

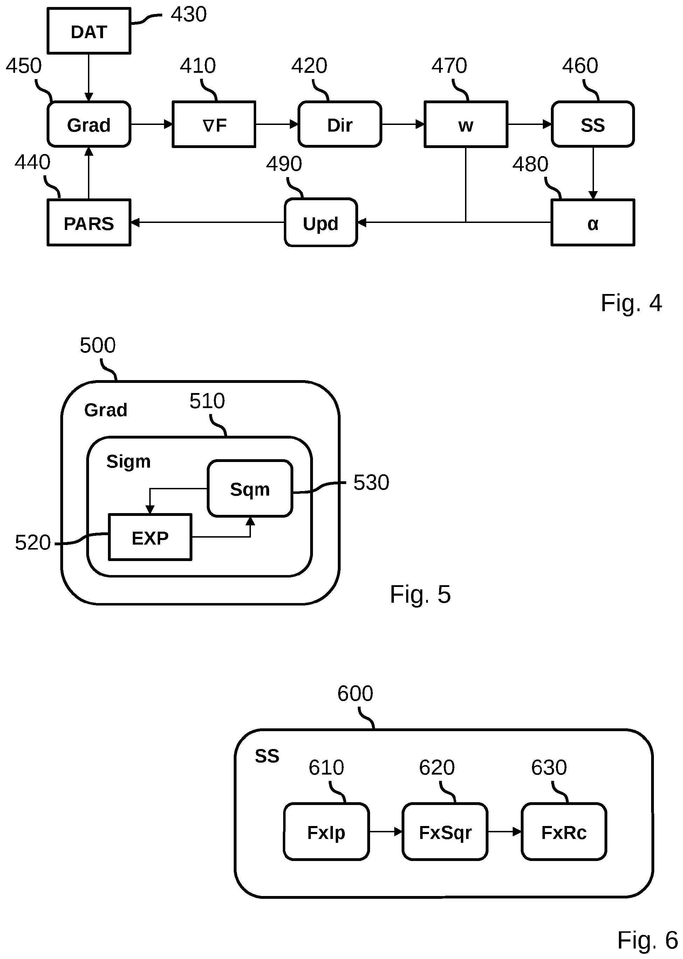

Some general information is now given on logistic regression models. This information will be used when discussing the application of the provided techniques for privacy-preserving fitting and application of logistic regression models as discussed w.r.t. Fig. 4-6.

Generally, binary logistic regression models the relationship between the probability of a response variable *y* ∈ 0,1 being 1 and independent features *x* ∈ [0,1]*^{k}* as $P \left(y=\left.1\right|x\right) = \frac{1}{1 + exp \left(-{β}_{0}+\left〈x,{β}_{1},…,{β}_{k}\right〉\right)} ,$ where *β* represent the model parameters. The right-hand side of this equation may be denoted herein as *p*(*x*).

Given a dataset of features *X* ∈ [0,1]^{*k*×*N*} , the log-likelihood function of the logistic regression model may be denoted $l \left(β\right) = {\sum }_{i = 1}^{n} {y}_{i} \left({β}_{0}+\left〈{x}_{i}, β\right〉\right) - log \left(1+exp\left({β}_{0}+\left〈{x}_{i}, β\right〉\right)\right)$

This function is differentiable, and the partial derivatives w.r.t. *βⱼ* are given by: $\frac{\partial l}{\partial {β}_{j}} = {\sum }_{i = 1}^{n} \left({y}_{i}-p\left({x}_{i}\right)\right) {x}_{i , j}$ for *j* = 1, ... , *k* and $\frac{\partial l}{\partial {β}_{0}} = {\sum }_{i = 1}^{n} {y}_{i} - p \left({x}_{i}\right)$

The *β* maximizing the (log)likelihood function may be determined using numerical optimization methods. It may be observed that computing a partial derivative according to the above formula involve summing over respective contributions of respective records of the dataset, including computations of the exponential function and reciprocal in *p*(*xᵢ*)*.*

When using numerical optimization methods to optimize the log-likelihood, as is known per se, an objective function may be used that comprises the log-likelihood as well as a regularization term applied to the model parameters *β*, e.g., a L2 regularization.

**Fig. 4** shows a detailed, yet non-limiting, example of how to perform a numeric optimization of an objective function using cryptographic secure multi-party computation.

Shown in the figure are the parameters **PARS,** 440 of the objective function. The parameters may be represented as secret values of the multi-party computation. In particular, the parameters can be secret fixed-point numbers. Cryptographic protocols for computing with fixed-point numbers under multi-party computation are known per se, e.g., from "Design of large scale applications of secure multiparty computation: secure linear programming", S.J.A. de Hoogh, PhD thesis, Eindhoven University of Technology, 2012 (incorporated herein by reference inasfar as protocols for fixed-point computation under MPC are concerned). For example, the parameters can be the weights and intercept of a regression model; the weights and biases of a neural network; etc.

As illustrated in the figure, the optimization may be be performed by determining, using the multi-party computation, a secret optimization direction **w,** 470; and determining, using the multi-party computation and based on the optimization direction **w,** a secret step size **α**, 460. The step size is also referred to as the learning rate. Based on the secret optimization direction **w** and the secret step size **α**, and using the multi-party computation, the secret parameters **PARS** of the objective function may be updated. In particular, the determining of **w** and **α**, and the updating of **PARS** may be performed iteratively, e.g., for a fixed number of iterations or until a stopping criterion is reached. It is noted that various optimization techniques that are known per se follow the pattern of iteratively determining an optimization direction **w** and updating the parameters **PARS** to be optimized using a step size. For example, the numerical optimization used can be gradient descent (e.g., damped gradient descent); Newton-Rhapson (e.g., damped Newton-Rhapson); or a quasi-Newton method such as BFGS or L-BFGS.

In particular, in many cases, determining the optimization direction **w** may comprise applying a gradient evaluation operation **Grad,** 450, in which a gradient **∇F**, 410, of the objective function may be evaluated under the multi-party computation. This is the case for gradient descent, where the gradient ∇**F** may be used as optimization direction **w;** but also for quasi-Newton methods, where the gradient ∇**F** may be used as an input to a further optimization direction determining operation **Dir,** 420 that outputs the direction **w.** As illustrated in the figure, gradient evaluation **Grad** in many cases uses a dataset **DAT,** 430 on which the parameters **PARS** are fitted, as illustrated elsewhere in this specification for logistic regression.

In various cases, gradient evaluation **Grad** may comprise evaluating a sigmoid at a secret point x. Techniques to efficiently and accurately compute such a sigmoid under multi-party computation are discussed in more detail with respect to Fig. 5.

Interestingly, the inventors realized that it is possible to use L-BFGS as numeric optimization technique under multi-party computation. L-BFGS is beneficial because it is efficient numerical optimization method with a high convergence rate that does not need many evaluations of either the gradient **Grad** or the objective function, e.g., the log-likelihood function, itself. This is particularly beneficial in combination with multi-party computation, because in this setting the numeric operations involved in evaluating the objective function or its gradient, e.g., secret fixed point operations, are relatively expensive.

In particular, L-BFGS may be considered to be based on the Newton-Rhapson method. Given a smooth objective function *f* and a point *xᵢ*, Newton-Rhapson determines a new point *x*_{*i*+1} which further minimizes the function: ${x}_{i + 1} = {x}_{i} - {α}_{i} {H}^{- 1} \left({x}_{i}\right) ∇ f \left({x}_{i}\right) .$

Here, *∇f*( ) denotes the gradient of *f* , *H*^{*-*1} denotes the inverse of the hessian of *f,* and *α* denotes the step size for this iteration.

While, in the non-MPC scenario, the inverse of the Hessian can in many cases be computed directly, it is preferred in MPC to avoid this because of the computational costs. For example, for logistic regression, the Hessian may include *k* × *k* partial derivatives, computed based on the dataset **DAT.** Moreover, also inverting the Hessian using is typically relatively expensive in MPC, much more so than in the non-MPC setting. These aspects make Newton-Rhapson expensive under MPC.

As the inventors realized, many of these efficiency problems can to a large degree be remedied by using a quasi-Newton method, such as in particular L-BFGS. Instead of computing the Hessian directly and then inverting it, L-BFGS may effectively determine an approximation to the inverse Hessian *H*⁻¹(*xₙ*) by keeping a history of results from previous iterations (for example, of at most or at least five previous iterations), and may use this approximation to determine the optimization direction **w** as $w = {H}^{- 1} \left({x}_{n}\right) ∇ f \left({x}_{n}\right) .$

Here, the inverse Hessian may be explicitly computed under multi-party computation, but it is also possible to avoid this explicit computation by applying two-loop recursion under the multi-party computation. In particular, using two-loop recursion, the determination **Dir** of the optimization direction **w** from the gradient ∇**F** under multi-party computation may be implemented as illustrated by the following pseudo-code.

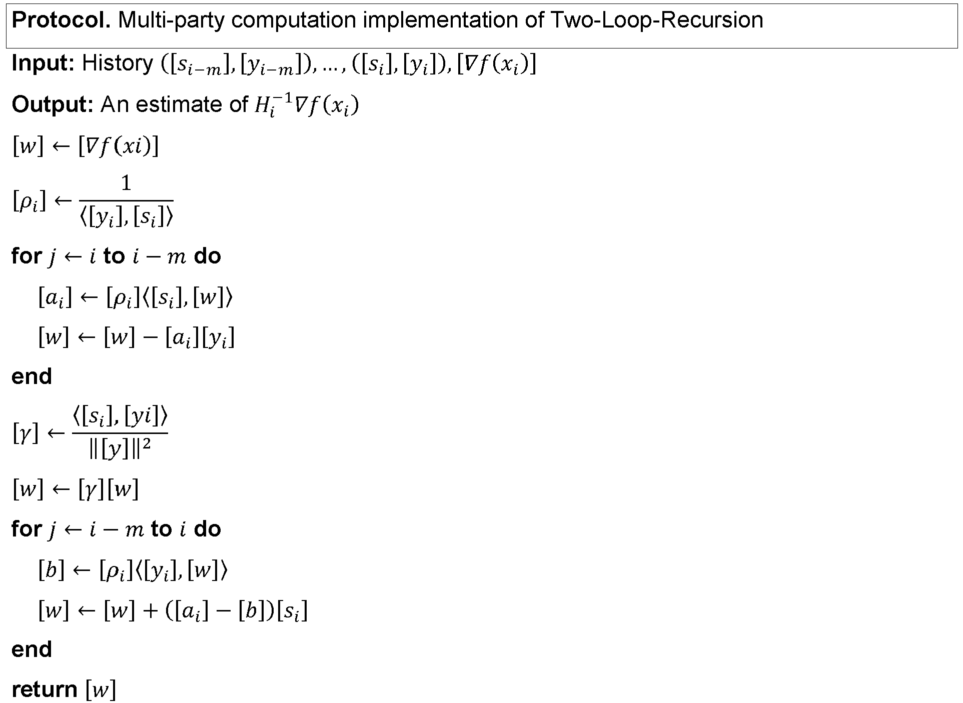

In the above pseudo-code, the notation [*x*] is used to denote that *x* is a secret value of the multi-party computation. The above pseudo-code can be implemented using known techniques for multi-party arithmetic, e.g., fixed-point arithmetic. Specifically, the computation of [*ρᵢ*] can be implemented by an oblivious inner product followed by an oblivious reciprocal of fixed point numbers. Similarly, other 〈.,. 〉 computations shown in the algorithm can be implemented by an oblivious inner product, and products by and by oblivious multiplication. The computation of [y] can be implemented by computing the numerator and denominator and then applying an oblivious fixed point division.

Determining the optimization direction for L-BFGS may in particular comprise checking whether a history of sufficient previous iterations is already available, e.g., if five iterations have already been performed. If this is not the case, the optimization direction can for example be determined by using gradient descent. As part of the L-BFGS history, also previous values of *ρᵢ* may be kept. This is advantageous when using multi-party computation, since this value is relatively costly to compute.

The figure further shows a step size determining operation **SS,** 460. Interestingly, using such an operation, the step size **α** may be determined adaptively per iteration, instead of using a fixed step size or a fixed schedule of step sizes, for example. Generally, using an adaptive step size can speed up convergence and thus reduce the number of iterations that is needed. This is an important advantage in the MPC setting, since iterations are typically relatively costly to perform. Such faster convergence can be attained when using gradient descent, for example.

For some optimization techniques, in particular for quasi-Newton methods such as L-BFGS, using an adaptive step size not only speeds up convergence, but also helps ensure that the optimization converges at all. In other words, when using a fixed step size as is typically done in work on optimization under MPC, such methods may in many cases not converge, for example in the case of logistic regression. By using the step size determining operation **SS** proposed herein, such convergence problems can be solved while still having an efficient implementation under MPC. For example, the implementation is much more efficient than if it would be attempted to computed the step size through line search, as is normally done in the non-MPC setting. Such a line search may evaluate the objective function at several different potential candidates for the step size until one is found that provides an optimal improvement. In the MPC, such a solution may be costly since it involves evaluating the objective function multiple times. Interestingly, the proposed step size determining operation **SS** can avoid this. In particular, operation **SS** may not use the dataset **DAT,** e.g., may use the gradient ∇**F** and optimization direction w only.

In particular, step size determining operation **SS** may determine the secret step size a from the secret optimization direction w and from a secret curvature value of the objective function using the multi-party computation. Specifically, the curvature value may be determined by determining a secret inner product between the secret optimization direction **w** and a secret gradient of the objective function. The step size α may be determined such that, the larger the curvature, e.g., the larger the value of the inner product, the smaller the step size. In particular, the step size can be determined by evaluating the following formula under multi-party computation: $α = \frac{1}{1 + \sqrt{\left〈∇f\left({x}_{i}\right),w\right〉}} .$

Interestingly, as discussed with respect to Fig. 6, the above formula can be efficiently evaluated under multi-party computation using techniques that are known per se, e.g., using a privacy-preserving inner product protocol; a privacy-preserving square root protocol; and a privacy-preserving reciprocal protocol.

In particular, this formula may be used in combination with an objective function that is self-concordant, for example the objective function for fitting a logistic or other regression model. Mathematically, it is known from the optimization literature that this step size formula can be used in combination with a variety of optimization methods; in particular, in combination with L-BFGS it is known to provide super-linear convergence. See W. Gao et al., "Quasi-Newton Methods: Superlinear Convergence Without Line Searches for Self-Concordant Functions", arXiv:1612.06965v3 (incorporated herein by reference, specifically the definition of self-concordance and of the curvature-adaptive step).

The figure also shows an updating operation Upd, 490, that is configured to update, using the multi-party computation, the secret parameters **PARS** of the objective function based on the secret optimization direction **w** and the secret step size **α**. The updating may comprise adding to the values of the secret parameters a scaling of the optimization direction according to the secret step size, e.g., [*x*_{*i*+1}] ← [*xᵢ*] - [*α*][*w*]*.*

The following pseudo-code demonstrates determining the iterative numeric optimization discussed with respect to this figure, in the example where L-BFGS is used as a numeric optimizer, and the step size is computed according to the formula above:

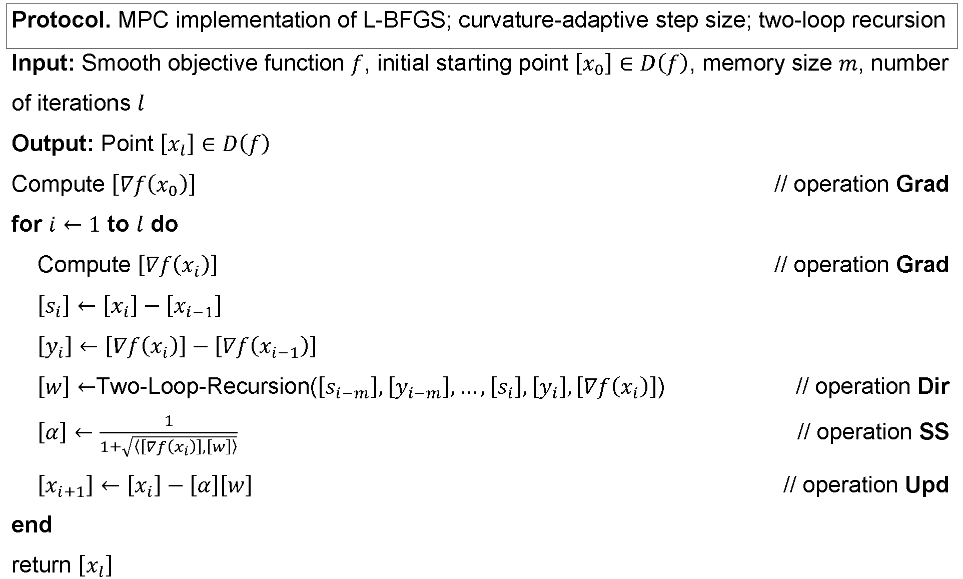

In the example, [. ] is used to denote secret values of the multi-party computation. The secret values may be represented as secret fixed-point values of the multi-party computation, and the operations shown in the example may be implemented by privacy-preserving fixed point arithmetic protocols, as also discussed elsewhere.

The determined parameters **PARS** may represent the fitting of a model, e.g., a logistic regression model or a neural network, to a dataset DAT that is partly or fully secret. Although not shown in this figure, the parameters may be further used to apply the fitted model on inputs under the multi-party computation. In this setting, the parameters **PARS** are typically secret values of the MPC. The inputs are typically secret as well, but that is not needed per se. To apply the model, for example, a log-likelihood may be computed and optionally compared to a threshold value. Interestingly, similarly to the computation **Grad** of the gradient, also the application of the model can in many cases involve the evaluation of a sigmoid function or other use of an exponential function, which can be made more efficient as described herein.

Fig. 5 shows a detailed, yet non-limiting, example of the use of cryptographic secure multi-party computation to evaluate an exponential function. In this particular example, as also discussed with respect to Fig. 4, the computation of the exponent is performed as part of evaluating a sigmoid function **Sigm,** 510, on secret inputs, where the sigmoid itself is part of the computation of a gradient **Grad**, 500. The provided techniques also apply in other cases, where an exponential function is applied to a secret input, however. Preferably, the exponential function is applied to an input from a limited domain, e.g., to values of at most 2, at most 1, or at most 0.5. A lower bound may not be needed.

As illustrated in this figure, the exponential function may be evaluated by iteratively updating an estimate **EXP,** 520 of the value of the exponential function at the secret point x. The estimate can be stored as a secret fixed-point number, for example, as is known for example from the reference "Design of large scale applications of secure multiparty computation: secure linear programming", S.J.A. de Hoogh.

The iterative updates may be performed by using a square-and-multiply operation **Sqm,** 530. In particular, the exponential function may be estimated based on: ${\left(1+\frac{x}{j}\right)}^{j} \to {e}^{x} as j \to ∞$ for all $x ∈ ℝ$, and accordingly, an estimate of exp(*x*) may be obtained by computing the left hand side of the above formula for up to *K* terms for a given value *K,* e.g., $Q \left(x\right) = {\left(1+\frac{x}{K}\right)}^{K} .$

Here, the value K may be selected based on the desired accuracy and/or a bound on the input value. Namely, for *x* > 0 the error of the estimation may be bounded from above by (*x*² ** e^{x}*)/2 *K.* A value for *K* that provides the desired efficiency may be derived from this bound. In practice, a value of at most or at least 32, at most or at least 64, or at most or at least 128 can be selected, for example.

In particular, having selected a value for *K*, the estimate **EXP** may first be initialized to $1 + \frac{x}{K}$. This value may be computed by multiplying (e.g., fixed-point representations of) *x by K*⁻¹*.* Interestingly, since *K* is public, no division of secret numbers under multi-party computation is needed, improving efficiency.

The square-and-multiply operation **Sqm** may update the estimate **EXP** by performing a square-and-multiply algorithm. It is preferred to select the parameter *K* as a power of 2, such that the square-and-multiply can be implemented by repeated squarings. In this case, the square-and-multiply **Sqm** may be implemented by log(*K*) squarings, allowing a particularly efficient implementation under multi-party computation.

The inventors realized that this way of evaluating the exponential function is particularly advantageous in regression setting. Namely, in this setting, the provided techniques provide an accurate estimate already with a relatively small value of the parameter *K* and thus a relatively small number of square-and-multiply iterations.

In particular, in logistic regression, the exponential function may be evaluated on secret values of the form exp(-*β*₀ + 〈*x, β*₁, ..., *βₖ*〉). Especially when the features are normalized, e.g., within [0,1], and/or when the model weights *β* are constrained by regularization, such as R2 regularization, the input of the exponential function is relatively small, so that the discussed evaluation is accurate and efficient.

**Fig. 6** shows a detailed, yet non-limiting, example of how to compute a step size for a numeric optimization using cryptographic secure multi-party computation. In this example, a secret step size is computed from from a secret optimization direction and from a secret curvature value of an objective function being optimized. Such a step size computed based on a curvature value, may be referred to as a curvature-adaptive step size. In particular, the curvature may be determined by determining a secret inner product of the secret gradient of the objective function, with the secret optimization direction. The step size may be computed to be decreasing in the amount of curvature: the more curvature, the smaller the step size.

Interestingly, the provided techniques provide a step size for the numeric optimization that can improve the convergence of the numeric optimization, while being itself efficient to compute under multi-party computation. This is in contrast for example to line search methods, which typically comprise multiple evaluations of the objective function and are thus costly to perform under multi-party computation, especially for relatively expensive objective functions such as the objective function for fitting a logistic regression model.

In particular, the step size may be computed according to the following formula: $α ← \frac{1}{1 + \sqrt{\left〈∇f\left({x}_{i}\right),w\right〉}} .$

Preferably, the objective function is non-concordant, in which case this step size formula is known from the scientific literature to provide strong mathematical convergence properties. In particular, when using L-BFGS as numeric optimization algorithm, as also proposed by the inventors elsewhere in this specification, this choice of step size may provide super-linear convergence of the numeric optimization.

As also shown in the figure, the step size may be computed using relatively few invocations of multi-party secure arithmetic protocols. In particular, as illustrated in the figure, the step size computation may be implemented by an oblivious inner product **FxIp,** 610; an oblivious fixed point square root **FxSqr,** 620; and an oblivious reciprocal **FxRc,** 630. In particular, these operations **FxIp, FxSqr, FxRc** may be implemented to operate on secret fixed point numbers as known from the multi-party computation literature per se, for example in Design of large scale applications of secure multiparty computation: secure linear programming", S.J.A. de Hoogh.

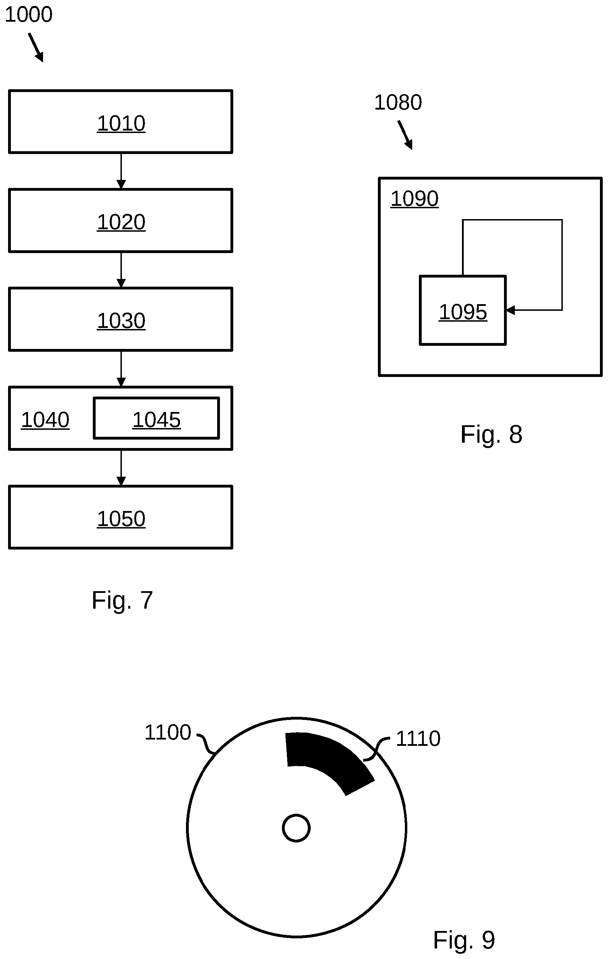

**Fig. 7** shows a block-diagram of a cryptographic method 1000 of performing a privacy-preserving computation. The privacy-preserving computation may be performed by a cryptographic device as a secure multi-party computation between multiple cryptographic devices comprising the cryptographic device. The privacy-preserving computation may comprise a numeric optimization of an objective function. For example, the cryptographic device can be device 100 of Fig. 1 or device 200 of Fig. 2. However, this is not a limitation, in that the method 1000 may also be performed using another system, apparatus or device. The method 1000 may further comprise the carrying out of the secure multi-party computation by the other cryptographic devices. For example, the method 1000 may be carried out by a cryptographic system, e.g., cryptographic system 010 of Fig. 3. The method 1000 may be computer-implemented.

The method 1000 may comprise, in an operation titled "COMMUNICATE", communicating 1010 with at least one further cryptographic device of the cryptographic system. The method 1000 may comprise, in an operation titled "ACCESS PARAMETERS", accessing 1020 data representing parameters of the objective function as secret values of the multi-party computation. The method 1000 may comprise, in an operation titled "DETERMINE OPTIMIZATION DIRECTION", determining 1030, using the multi-party computation, a secret optimization direction.The method 1000 may comprise, in an operation titled "DETERMINE STEP SIZE", determining 1040, using the multi-party computation and based on the optimization direction, a secret step size. The method 1000 may comprise, in an operation titled "UPDATE PARAMETERS", updating 1050, using the multi-party computation, the secret parameters of the objective function based on the secret optimization direction and the secret step size.

The determining 1040 may comprise, in an operation titled "USE CURVATURE", determining 1045 the secret step size from the secret optimization direction and from a secret curvature value of the objective function using the multi-party computation.

**Fig. 8** shows a block-diagram of a cryptographic method 1080 of performing a privacy-preserving computation. The privacy-preserving computation may be performed by a cryptographic device as a secure multi-party computation between multiple cryptographic devices comprising the cryptographic device.

The privacy-preserving computation may comprising an evaluation of an exponential function, wherein the exponential function is applied to a secret point x. For example, the exponential function may be evaluated as part of evaluating a sigmoid; as part of applying a trained model such as a fitted regression model to an input; and the like. For example, the cryptographic device can be device 100 of Fig. 1 or device 200 of Fig. 2. However, this is not a limitation, in that the method 1800 may also be performed using another system, apparatus or device. The method 1080 may further comprise the carrying out of the secure multi-party computation by the other cryptographic devices.. For example, the method 1080 may be carried out by a cryptographic system, e.g., cryptographic system 010 of Fig. 3. The method 1080 may be computer-implemented.

The method 1080 may comprise, in an operation titled "EVALUATE EXP", determining 1090 an evaluation of the exponential function at the secret point x by computing (1+x/K)^K using the secure multi-party computation. The determining 1090 may comprise, in an operation titled "SQM", using square-and-multiply, e.g., repeated squaring, to compute 1095 a higher power of (1+x/K) from lower powers of (1+x/K).

It will be appreciated that, in general, the operations of method 1000 of Fig. 10 and method 1080 of Fig. 11. may be performed in any suitable order, e.g., consecutively, simultaneously, or a combination thereof, subject to, where applicable, a particular order being necessitated, e.g., by input/output relations. Methods 1000 and 1080 can also be combined, e.g., the numeric optimization of method 1000 may comprise the evaluation of an exponential function of method 1080.

The method(s) may be implemented on a computer as a computer implemented method, as dedicated hardware, or as a combination of both. As also illustrated in **Fig. 9****,** instructions for the computer, e.g., executable code, may be stored on a computer readable medium 1100, e.g., in the form of a series 1110 of machine-readable physical marks and/or as a series of elements having different electrical, e.g., magnetic, or optical properties or values. The medium 1100 may be transitory or non-transitory. Examples of computer readable mediums include memory devices, optical storage devices, integrated circuits, servers, online software, etc. Fig. 11 shows an optical disc 1100.

The instructions may be instructions for one or more particular devices of the cryptographic system. In particular, the instructions may comprise instructions for a cryptographic device to perform a numeric optimization and/or an evaluation of an exponential function using multi-party computation.

Examples, embodiments or optional features, whether indicated as non-limiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A cryptographic system (010) for performing a privacy-preserving computation on secret data, wherein the cryptographic system comprises multiple cryptographic devices (321-323), wherein the multiple cryptographic devices are configured to perform the computation as a cryptographic secure multi-party computation between the multiple cryptographic devices, wherein the privacy-preserving computation comprises a numeric optimization of an objective function, wherein a cryptographic device of the multiple cryptographic devices is configured to perform the numeric optimization by:
- representing parameters of the objective function as secret values of the multi-party computation;
- determining, using the multi-party computation, a secret optimization direction;
- determining, using the multi-party computation and based on the optimization direction, a secret step size; and
- updating, using the multi-party computation, the secret parameters of the objective function based on the secret optimization direction and the secret step size; wherein the cryptographic device is configured to determine the secret step size from the secret optimization direction and from a secret curvature value of the objective function using the multi-party computation.

2. The cryptographic system (010) of any preceding claim, wherein the cryptographic device is configured to store the secret step size as a secret fixed-point value of the multi-party computation, and to compute the secret step size by applying one or more privacy-preserving fixed point arithmetic protocols.

3. The cryptographic system (010) of any preceding claim, wherein the cryptographic device is configured to determine the curvature value by determining a secret inner product between the secret optimization direction and a secret gradient of the objective function.

4. The cryptographic system (010) of claim 3, wherein the cryptographic device is configured to determine the step size from the gradient and the optimization direction by applying a privacy-preserving inner product protocol; a privacy-preserving square root protocol; and a privacy-preserving reciprocal protocol.

5. The cryptographic system (010) of any preceding claim, wherein the cryptographic device is configured to perform the numeric optimization by performing a quasi-Newton optimization.

6. The cryptographic system (010) of any of the preceding claims, wherein the cryptographic system is configured to fit secret model parameters of a regression model on secret input features and/or secret response variables, wherein the fitting is performed by the numeric optimization of the objective function.

7. The cryptographic system (010) of claim 6, wherein the objective function comprises a sigmoid function, wherein the sigmoid function is applied to a secret point x representing a biased linear combination of input features according to the model parameters, and wherein the cryptographic devices are configured to evaluate the sigmoid function based on evaluating an exponential function at the secret point x by computing (1+x/K)^K.

8. The cryptographic system (010) of claim 7, wherein the cryptographic devices are configured to store the evaluation of the exponential function as a secret fixed-point number of the secure multi-party computation.

9. The cryptographic system (010) of claim 7 or 8, wherein the cryptographic devices are configured to determine the evaluation by repeated squaring.

10. The cryptographic system (010) of any one of claims 6-9, wherein the objective function comprises a regularization term applied to the model parameters.

11. The cryptographic system (010) of any one of claims 6-10, wherein the regression model is a logistic regression model, a multinomial regression model, an ordinal regression model, or a linear regression model.

12. The cryptographic system (010) of any one of claims 6-11, wherein the model parameters are kept secret and the cryptographic system is further configured to apply the fitted regression model to public and/or secret input features.

13. A cryptographic device (100, 321-323) for use in the cryptographic system (010) comprising multiple cryptographic devices according to any one of claims 1-12, wherein the cryptographic device is for performing a privacy-preserving computation as a cryptographic secure multi-party computation between the multiple cryptographic devices, wherein the privacy-preserving computation comprises a numeric optimization of an objective function, wherein the cryptographic device comprises:
- a communication interface (180) configured for communication with at least one further cryptographic device of the cryptographic system;
- a data interface (120) for accessing data representing parameters of the objective function as secret values of the multi-party computation;
- a processor subsystem (140) configured to perform the numeric optimization by:
- determining, using the multi-party computation, a secret optimization direction;
- determining, using the multi-party computation and based on the optimization direction, a secret step size; and
- updating, using the multi-party computation, the secret parameters of the objective function based on the secret optimization direction and the secret step size;
wherein the processor subsystem is configured to determine the secret step size from the secret optimization direction and from a secret curvature value of the objective function using the multi-party computation.

14. A cryptographic method (1000) of performing a privacy-preserving computation, wherein the privacy-preserving computation is performed by a cryptographic device as a secure multi-party computation between multiple cryptographic devices comprising the cryptographic device, wherein the privacy-preserving computation comprises a numeric optimization of an objective function, wherein the cryptographic method comprises:
- communicating (1010) with at least one further cryptographic device of the cryptographic system;
- accessing (1020) data representing parameters of the objective function as secret values of the multi-party computation;
- determining (1030), using the multi-party computation, a secret optimization direction;
- determining (1040), using the multi-party computation and based on the optimization direction, a secret step size; and
- updating (1050), using the multi-party computation, the secret parameters of the objective function based on the secret optimization direction and the secret step size;
wherein determining (1040) the secret step size comprises determining (1045) the secret step size from the secret optimization direction and from a secret curvature value of the objective function using the multi-party computation.

15. A transitory or non-transitory computer-readable medium (1100) comprising data (1110) representing instructions which, when executed by a processor system, cause the processor system to perform the cryptographic method of claim 14.

## Patentansprüche

1. Ein kryptographisches System (010) zum Durchführen einer datenschutzwahrenden Berechnung an geheimen Daten, wobei das kryptographische System mehrere kryptographische Vorrichtungen (321-323) umfasst, wobei die mehreren kryptographischen Vorrichtungen dazu eingerichtet sind, die Berechnung als eine kryptographisch sichere Mehrparteienberechnung zwischen den mehreren kryptographischen Vorrichtungen durchzuführen, wobei die datenschutzwahrende Berechnung eine numerische Optimierung einer Zielfunktion umfasst, wobei eine kryptographische Vorrichtung der mehreren kryptographischen Vorrichtungen dazu eingerichtet ist, die numerische Optimierung durch Folgendes durchzuführen:
- Repräsentieren von Parametern der Zielfunktion als geheime Werte der Mehrparteienberechnung;
- Bestimmen, unter Verwendung der Mehrparteienberechnung, einer geheimen Optimierungsrichtung;
- Bestimmen, unter Verwendung der Mehrparteienberechnung und auf Grundlage der Optimierungsrichtung, einer geheimen Schrittweite; und
- Aktualisieren, unter Verwendung der Mehrparteienberechnung, der geheimen Parameter der Zielfunktion auf Grundlage der geheimen Optimierungsrichtung und der geheimen Schrittweite;
wobei die kryptographische Vorrichtung dazu eingerichtet ist, die geheime Schrittweite aus der geheimen Optimierungsrichtung und aus einem geheimen Krümmungswert der Zielfunktion unter Verwendung der Mehrparteienberechnung zu bestimmen.

2. Das kryptographische System (010) nach einem der vorhergehenden Ansprüche, wobei die kryptographische Vorrichtung dazu eingerichtet ist, die geheime Schrittweite als einen geheimen Festkommawert der Mehrparteienberechnung zu speichern und die geheime Schrittweite durch Anwenden eines oder mehrerer datenschutzwahrender Festkommaarithmetikprotokolle zu berechnen.

3. Das kryptographische System (010) nach einem der vorhergehenden Ansprüche, wobei die kryptographische Vorrichtung dazu eingerichtet ist, den Krümmungswert durch Bestimmen eines geheimen inneren Produkts der geheimen Optimierungsrichtung und eines geheimen Gradienten der Zielfunktion zu bestimmen.

4. Das kryptographische System (010) nach Anspruch 3, wobei die kryptographische Vorrichtung dazu eingerichtet ist, die Schrittweite aus dem Gradienten und der Optimierungsrichtung durch Anwenden eines datenschutzwahrenden Protokolls für ein inneres Produkt; eines datenschutzwahrenden Quadratwurzelprotokolls; und eines datenschutzwahrenden Kehrwertprotokolls zu bestimmen.

5. Das kryptographische System (010) nach einem der vorhergehenden Ansprüche, wobei die kryptographische Vorrichtung dazu eingerichtet ist, die numerische Optimierung durch Durchführen einer Quasi-Newton-Optimierung durchzuführen.

6. Das kryptographische System (010) nach einem der vorhergehenden Ansprüche, wobei das kryptographische System dazu eingerichtet ist, geheime Modellparameter eines Regressionsmodells an geheime Eingabemerkmale und/oder geheime Antwortvariablen anzupassen, wobei die Anpassung durch die numerische Optimierung der Zielfunktion durchgeführt wird.

7. Das kryptographische System (010) nach Anspruch 6, wobei die Zielfunktion eine Sigmoidfunktion umfasst, wobei die Sigmoidfunktion auf einen geheimen Punkt x angewendet wird, der eine mit einem Bias versehene lineare Kombination von Eingabemerkmalen gemäß den Modellparametern repräsentiert, und wobei die kryptographischen Vorrichtungen dazu eingerichtet sind, die Sigmoidfunktion basierend auf dem Auswerten einer Exponentialfunktion an dem geheimen Punkt x durch Berechnen von (1 +x/K)^K auszuwerten.

8. Das kryptographische System (010) nach Anspruch 7, wobei die kryptographischen Vorrichtungen dazu eingerichtet sind, die Auswertung der Exponentialfunktion als eine geheime Festkommazahl der sicheren Mehrparteienberechnung zu speichern.

9. Das kryptographische System (010) nach Anspruch 7 oder 8, wobei die kryptographischen Vorrichtungen dazu eingerichtet sind, die Auswertung durch wiederholtes Quadrieren zu bestimmen.

10. Das kryptographische System (010) nach einem der Ansprüche 6-9, wobei die Zielfunktion einen auf die Modellparameter angewendeten Regularisierungsterm umfasst.

11. Das kryptographische System (010) nach einem der Ansprüche 6-10, wobei das Regressionsmodell ein logistisches Regressionsmodell, ein multinomiales Regressionsmodell, ein ordinales Regressionsmodell oder ein lineares Regressionsmodell ist.

12. Das kryptographische System (010) nach einem der Ansprüche 6-11, wobei die Modellparameter geheim gehalten werden und das kryptographische System ferner dazu eingerichtet ist, das angepasste Regressionsmodell auf öffentliche und/oder geheime Eingabemerkmale anzuwenden.

13. Eine kryptographische Vorrichtung (100, 321-323) zur Verwendung in dem kryptographischen System (010) nach einem der Ansprüche 1-12, das mehrere kryptographische Vorrichtungen umfasst, wobei die kryptographische Vorrichtung zum Durchführen einer datenschutzwahrenden Berechnung als eine kryptographisch sichere Mehrparteienberechnung zwischen den mehreren kryptographischen Vorrichtungen vorgesehen ist, wobei die datenschutzwahrende Berechnung eine numerische Optimierung einer Zielfunktion umfasst, wobei die kryptographische Vorrichtung umfasst:
- eine Kommunikationsschnittstelle (180), die zur Kommunikation mit mindestens einer weiteren kryptographischen Vorrichtung des kryptographischen Systems eingerichtet ist;
- eine Datenschnittstelle (120) zum Zugreifen auf Daten, die Parameter der Zielfunktion als geheime Werte der Mehrparteienberechnung repräsentieren;
- ein Prozessorsubsystem (140), das dazu eingerichtet ist, die numerische Optimierung durch Folgendes durchzuführen:
- Bestimmen, unter Verwendung der Mehrparteienberechnung, einer geheimen Optimierungsrichtung;
- Bestimmen, unter Verwendung der Mehrparteienberechnung und auf Grundlage der Optimierungsrichtung, einer geheimen Schrittweite; und
- Aktualisieren, unter Verwendung der Mehrparteienberechnung, der geheimen Parameter der Zielfunktion auf Grundlage der geheimen Optimierungsrichtung und der geheimen Schrittweite;
wobei das Prozessorsubsystem dazu eingerichtet ist, die geheime Schrittweite aus der geheimen Optimierungsrichtung und aus einem geheimen Krümmungswert der Zielfunktion unter Verwendung der Mehrparteienberechnung zu bestimmen.

14. Ein kryptographisches Verfahren (1000) zum Durchführen einer datenschutzwahrenden Berechnung, wobei die datenschutzwahrende Berechnung durch eine kryptographische Vorrichtung als eine sichere Mehrparteienberechnung zwischen mehreren kryptographischen Vorrichtungen durchgeführt wird, welche die kryptographische Vorrichtung umfassen, wobei die datenschutzwahrende Berechnung eine numerische Optimierung einer Zielfunktion umfasst, wobei das kryptographische Verfahren umfasst:
- Kommunizieren (1010) mit mindestens einer weiteren kryptographischen Vorrichtung des kryptographischen Systems;
- Zugreifen (1020) auf Daten, die Parameter der Zielfunktion als geheime Werte der Mehrparteienberechnung repräsentieren;
- Bestimmen (1030), unter Verwendung der Mehrparteienberechnung, einer geheimen Optimierungsrichtung;
- Bestimmen (1040), unter Verwendung der Mehrparteienberechnung und auf Grundlage der Optimierungsrichtung, einer geheimen Schrittweite; und
- Aktualisieren (1050), unter Verwendung der Mehrparteienberechnung, der geheimen Parameter der Zielfunktion auf Grundlage der geheimen Optimierungsrichtung und der geheimen Schrittweite;
wobei das Bestimmen (1040) der geheimen Schrittweite ein Bestimmen (1045) der geheimen Schrittweite aus der geheimen Optimierungsrichtung und aus einem geheimen Krümmungswert der Zielfunktion unter Verwendung der Mehrparteienberechnung umfasst.

15. Ein transitorisches oder nicht-transitorisches computerlesbares Medium (1100), umfassend Daten (1110), die Anweisungen repräsentieren, die, wenn sie von einem Prozessorsystem ausgeführt werden, das Prozessorsystem veranlassen, das kryptographische Verfahren nach Anspruch 14 durchzuführen.

## Revendications

1. Un système cryptographique (010) destiné à effectuer un calcul préservant la confidentialité sur des données secrètes, dans lequel le système cryptographique comprend de multiples dispositifs cryptographiques (321-323), dans lequel les multiples dispositifs cryptographiques sont configurés pour effectuer le calcul sous forme d'un calcul cryptographique multipartite sécurisé entre les multiples dispositifs cryptographiques, dans lequel le calcul préservant la confidentialité comprend une optimisation numérique d'une fonction objectif, dans lequel un dispositif cryptographique parmi les multiples dispositifs cryptographiques est configuré pour effectuer l'optimisation numérique par :
- la représentation de paramètres de la fonction objectif sous forme de valeurs secrètes du calcul multipartite ;
- la détermination, à l'aide du calcul multipartite, d'une direction d'optimisation secrète ;
- la détermination, à l'aide du calcul multipartite et sur la base de la direction d'optimisation, d'une taille de pas secrète ; et
- la mise à jour, à l'aide du calcul multipartite, des paramètres secrets de la fonction objectif sur la base de la direction d'optimisation secrète et de la taille de pas secrète ;
dans lequel le dispositif cryptographique est configuré pour déterminer la taille de pas secrète à partir de la direction d'optimisation secrète et à partir d'une valeur de courbure secrète de la fonction objectif à l'aide du calcul multipartite.

2. Le système cryptographique (010) selon l'une quelconque des revendications précédentes, dans lequel le dispositif cryptographique est configuré pour stocker la taille de pas secrète sous forme d'une valeur à virgule fixe secrète du calcul multipartite, et pour calculer la taille de pas secrète en appliquant un ou plusieurs protocoles d'arithmétique en virgule fixe préservant la confidentialité.

3. Le système cryptographique (010) selon l'une quelconque des revendications précédentes, dans lequel le dispositif cryptographique est configuré pour déterminer la valeur de courbure en déterminant un produit scalaire secret entre la direction d'optimisation secrète et un gradient secret de la fonction objectif.

4. Le système cryptographique (010) selon la revendication 3, dans lequel le dispositif cryptographique est configuré pour déterminer la taille de pas à partir du gradient et de la direction d'optimisation par application d'un protocole de produit scalaire préservant la confidentialité ; d'un protocole de racine carrée préservant la confidentialité ; et d'un protocole d'inverse préservant la confidentialité.

5. Le système cryptographique (010) selon l'une quelconque des revendications précédentes, dans lequel le dispositif cryptographique est configuré pour effectuer l'optimisation numérique en effectuant une optimisation quasi-Newton.

6. Le système cryptographique (010) selon l'une quelconque des revendications précédentes, dans lequel le système cryptographique est configuré pour ajuster des paramètres de modèle secrets d'un modèle de régression sur des caractéristiques d'entrée secrètes et/ou des variables de réponse secrètes, dans lequel l'ajustement est effectué par l'optimisation numérique de la fonction objectif.

7. Le système cryptographique (010) selon la revendication 6, dans lequel la fonction objectif comprend une fonction sigmoïde, dans lequel la fonction sigmoïde est appliquée à un point secret x représentant une combinaison linéaire biaisée de caractéristiques d'entrée selon les paramètres du modèle, et dans lequel les dispositifs cryptographiques sont configurés pour évaluer la fonction sigmoïde sur la base de l'évaluation d'une fonction exponentielle au point secret x en calculant (1+x/K)^K.

8. Le système cryptographique (010) selon la revendication 7, dans lequel les dispositifs cryptographiques sont configurés pour stocker l'évaluation de la fonction exponentielle sous forme d'un nombre à virgule fixe secret du calcul multipartite sécurisé.

9. Le système cryptographique (010) selon la revendication 7 ou 8, dans lequel les dispositifs cryptographiques sont configurés pour déterminer l'évaluation par élévations au carré répétées.

10. Le système cryptographique (010) selon l'une quelconque des revendications 6 à 9, dans lequel la fonction objectif comprend un terme de régularisation appliqué aux paramètres du modèle.

11. Le système cryptographique (010) selon l'une quelconque des revendications 6 à 10, dans lequel le modèle de régression est un modèle de régression logistique, un modèle de régression multinomiale, un modèle de régression ordinale, ou un modèle de régression linéaire.

12. Le système cryptographique (010) selon l'une quelconque des revendications 6 à 11, dans lequel les paramètres du modèle sont gardés secrets et le système cryptographique est en outre configuré pour appliquer le modèle de régression ajusté à des caractéristiques d'entrée publiques et/ou secrètes.

13. Un dispositif cryptographique (100, 321-323) destiné à être utilisé dans le système cryptographique (010) selon l'une quelconque des revendications 1 à 12, le système cryptographique comprenant de multiples dispositifs cryptographiques, dans lequel le dispositif cryptographique est destiné à effectuer un calcul préservant la confidentialité sous forme d'un calcul cryptographique multipartite sécurisé entre les multiples dispositifs cryptographiques, dans lequel le calcul préservant la confidentialité comprend une optimisation numérique d'une fonction objectif, dans lequel le dispositif cryptographique comprend :
- une interface de communication (180) configurée pour une communication avec au moins un autre dispositif cryptographique du système cryptographique ;
- une interface de données (120) pour accéder à des données représentant des paramètres de la fonction objectif sous forme de valeurs secrètes du calcul multipartite ;
- un sous-système de processeur (140) configuré pour effectuer l'optimisation numérique par :
- la détermination, à l'aide du calcul multipartite, d'une direction d'optimisation secrète ;
- la détermination, à l'aide du calcul multipartite et sur la base de la direction d'optimisation, d'une taille de pas secrète ; et
- la mise à jour, à l'aide du calcul multipartite, des paramètres secrets de la fonction objectif sur la base de la direction d'optimisation secrète et de la taille de pas secrète ;
dans lequel le sous-système de processeur est configuré pour déterminer la taille de pas secrète à partir de la direction d'optimisation secrète et à partir d'une valeur de courbure secrète de la fonction objectif à l'aide du calcul multipartite.

14. Un procédé cryptographique (1000) d'exécution d'un calcul préservant la confidentialité, dans lequel le calcul préservant la confidentialité est effectué par un dispositif cryptographique sous forme d'un calcul multipartite sécurisé entre de multiples dispositifs cryptographiques comprenant le dispositif cryptographique, dans lequel le calcul préservant la confidentialité comprend une optimisation numérique d'une fonction objectif, dans lequel le procédé cryptographique comprend :
- la communication (1010) avec au moins un autre dispositif cryptographique du système cryptographique ;
- l'accès (1020) à des données représentant des paramètres de la fonction objectif sous forme de valeurs secrètes du calcul multipartite ;
- la détermination (1030), à l'aide du calcul multipartite, d'une direction d'optimisation secrète ;
- la détermination (1040), à l'aide du calcul multipartite et sur la base de la direction d'optimisation, d'une taille de pas secrète ; et
- la mise à jour (1050), à l'aide du calcul multipartite, des paramètres secrets de la fonction objectif sur la base de la direction d'optimisation secrète et de la taille de pas secrète ;
dans lequel la détermination (1040) de la taille de pas secrète comprend la détermination (1045) de la taille de pas secrète à partir de la direction d'optimisation secrète et à partir d'une valeur de courbure secrète de la fonction objectif à l'aide du calcul multipartite.

15. Un support transitoire ou non transitoire lisible par ordinateur (1100) comprenant des données (1110) représentant des instructions qui, lorsqu'elles sont exécutées par un système de processeur, amènent le système de processeur à exécuter le procédé cryptographique de la revendication 14.
